# EUROPEAN PATENT APPLICATION

(11) **EP 2 468 821 A1**
(43) Date of publication of application: **27.06.2012**
(21) Application number: 10809934.2
(22) Date of filing: 13.08.2010
(51) Int. Cl.: C08L 71/02, C08K 3/34

(54) **CURABLE COMPOSITION**

(30) Priority: 17.08.2009 JP 2009188400
(71) Applicant: Asahi Glass Company, Limited, Tokyo 100-8405 (JP)
(72) Inventor: HATANAKA, Yuki, Tokyo 100-8405 (JP); SUNAYAMA, Yoshitaka, Tokyo 100-8405 (JP); TANAKA, Hideaki, Tokyo 100-8405 (JP)
(74) Representative: Hartz, Nikolai
(86) International application number: PCT/JP2010/063780
(87) International publication number: WO 2011/021589

(57) **Abstract**

A curable composition having a low viscosity and good workability which can give a mechanically strong cured product is provided.

A curable composition comprising a curable resin component containing a polymer (A) having a polyoxyalkylene chain, a reactive silicon group and a urethane bond in the molecule and at least one silicate mineral (X) selected from the group consisting of a silicate mineral (B) represented by Al₂O₃·2SiO₂·nH₂O (wherein n is from 0 to 4) and a calcined silicate mineral (C) obtained by calcining the silicate mineral at 350 to 1,200°C

## Description

### TECHNICAL FIELD

The present invention relates to a curable composition with good workability which can give a mechanically strong cured product.

### BACKGROUND ART

Curable compositions containing oxyalkylene polymers having a reactive silicon group crosslink in the presence of moisture by forming a siloxane bond to give cured products having rubber elasticity and are used as sealants, adhesive or coatings for building applications.

Curable compositions used as sealants or adhesives generally contain fillers with a view to improving mechanical strength

For example, Patent Document 1 describes a moisture curable composition comprising a mixture of an acrylic polymer having a reactive silicon group and an oxyalkylene polymer having a reactive silicon group and an amorphous silica.

Patent Document 2 discloses incorporation of at least one member selected from kaolin, clay, talc and mica in a moisture curable composition based on an oxyalkylene polymer having a reactive silicon group to improve the elastic modulus of the cured product without significant decrease in strength and elongation.

### PRIOR ART DOCUMENTS

### PATENT DOCUMENTS

Patent Document 1: JP-A-11-302527
Patent Document 2: JP-A-2003-049063

### DISCLOSURE OF INVENTION

### TECHNICAL PROBLEM

Although curable compositions comprising an oxyalkylene polymer and a silicate mineral such as kaolin, clay, talc or mica can give cured products with improved mechanical strength and better elongation, such curable compositions tend to have high viscosities and hence poor workability.

The present invention was made under the above circumstance, and aims to provide a curable composition with a low viscosity and good workability which can give a mechanically strong cured product.

### SOLUTION TO PROBLEM

The present inventors found that use of (A) an oxyalkylene polymer having a reactive silicon group, particularly a polymer having an urethane bond in the molecule, in combination with (B) a silicate mineral and/or (C) a calcined silicate mineral enables provision of a curable composition which can give a cured product with good mechanical strength without a viscosity increase accompanying the addition of (B) a silicate mineral or (C) a calcined silicate mineral and accomplished the present invention.

The present invention provides the following [1] to [8].
[1] A curable composition comprising a curable resin component containing a polymer (A) having a polyoxyalkylene chain, a reactive silicon group represented by the following formula (1) and a urethane bond and at least one silicate mineral (X) selected from the group consisting of a silicate mineral (B) represented by the following formula (2) and a calcined silicate mineral (C) obtained by calcining the silicate mineral (B) at 350 to 1,200°C:

   -SiX¹ₐR¹₃₋ₐ (1)

   wherein R¹ is a C₁₋₂₀ monovalent organic group which may have a substituent (which is not hydrolysable), X¹ is a hydroxy group or a hydrolyzable group, and a is an integer of from 1 to 3 provided that when a plurality of R¹_{S} are present, they may be the same or different from one another, and when a plurality of X¹_{S} are present, they may be the same or different from one another;

   Al₂O₃·2SiO₂·nH₂O (2)

   wherein n is from 0 to 4.
[2] The curable composition according to [1], wherein the polymer (A) constitutes from 40 to 100 mass% of the curable resin component.
[3] The curable composition according to [1] or [2], wherein the amount of the silicate mineral (X) is from 1 to 300 parts by mass per 100 parts by mass of the curable resin component.
[4] The curable composition according to any one of [1] to [3], wherein at least part of the silicate mineral (X) has a surface treated with a surface finish.
[5] The curable composition according to any one of [1] to [4], wherein the silicate mineral (B) is kaolinite.
[6] The curable composition according to any one of [1] to [4], wherein the silicate mineral (C) is calcined kaolin.
[7] The curable composition according to any one of [1] to [6], wherein the polymer (A) has a number average molecular weight of from 1,000 to 20,000 per terminal.
[8] An adhesive or sealant comprising the curable composition as defined in any one of [1] to [7].

### ADVANTAGEOUS EFFECTS OF INVENTION

According to the present invention, it is possible to obtain a curable composition having a low viscosity and good workability which can give a mechanically strong cured product.

### DESCRIPTION OF EMBODIMENTS

Herein, number average molecular weight is a number average molecular weight (Mn) calculated as polystyrene measured by gel permeation chromatography (GPC) using tetrahydrofuran as the mobile phase, and weight average molecular weight is a weight average molecular weight (Mw) measured similarly by GPC. Molecular weight distribution is defined as weight average molecular weight (Mw)/number average molecular weight (Mn). The Mn of the polymer (A) is the Mn measured before curing.

Herein, "number average molecular weight per terminal" means the number average molecular weight (Mn) divided by the number of terminal groups.

Herein, a "cured product" means the product obtained by curing of the curable composition.

### <Curable resin component>

In the present invention, the curable resin component is a polymer having a reactive silicon group which can undergo a crosslinking reaction and having a molecular weight of at least 1,000.

The curable composition of the present invention comprises a curable resin composition (A) which contains the following polymer (A) and may contain an acrylic polymer (D) or an oxyalkylene polymer (E) having no urethane bond, which will be mentioned later, in addition to the polymer (A).

### <Polymer (A)>

The polymer (A) of the present invention (hereinafter sometimes referred to as the component (A)) is a polymer having a polyoxyalkylene chain, a reactive silicon group represented by the above-mentioned formula (1) and a urethane bond.

The polyoxyalkylene chain may be a block polymer chain or a random polymer chain, or a combination of a block polymer chain and a random polymer chain, and is preferably a block polymer chain.

Specific examples of the polyoxyalkylene chain include a polyoxyethylene chain, a polyoxypropylene chain, a polyoxybutylene chain, a polyoxyhexylene chain, a polyoxytetramethylene chain and a "molecular chain made of a copolymer of at least two cyclic ethers". The main chain of the polymer (A) may be made of one of them or may be made of a combination of a plurality of them. Particularly, the polymer (A) is preferably a polymer having only a polyoxypropylene chain substantially as its main chain because good flexibility and tensile properties are obtained.

The reactive silicon group of the polymer (A) is represented by the above-mentioned formula (1).

In the formula (1), R¹ is a C₁₋₂₀ monovalent organic group which may have a substituent (which is not hydrolysable). R¹ is preferably an alkyl group having at most 8 carbon atoms, more preferably a methyl group. When a plurality of R¹s are present in the same molecule, these R¹s may be the same or different from one another.

In the formula (1), X¹ is a hydroxy group or a hydrolyzable group. A hydrolyzable group means a group which is directly bonded to a silicon atom and capable of forming a siloxane bond through hydrolysis and/or condensation. The hydrolyzable group may, for example, be a halogen atom, an alkoxy group, an acyloxy group or an alkenyloxy group. When the hydrolyzable group has carbon atom(s), the number of carbon atoms is preferably at most 6, more preferably at most 4. X¹ is particularly preferably an alkoxy group having at most 4 carbon atoms or an alkenyloxy group having at most 4 carbon atoms. More specifically, X¹ is particularly preferably a methoxy group or an ethoxy group.

As the polymer (A), it is possible to use a polymer having a reactive silicon group represented by the formula (1) and having one, two or three X¹s attached to the silicon atom (wherein a is 1, 2 or 3), and a is preferably 2 or 3.

When two or more X¹_{S} are bonded to the silicon atom, these X¹_{S} may be the same or different from one another. Further, when the polymer (A) has plural reactive silicon groups represented by the formula (1), they all may be the same or different two or more groups.

The polymer (A) preferably has from 1 to 8, more preferably from 1.1 to 5, most preferably from 1.1 to 3 reactive silicon groups represented by the formula (1). When the number of reactive silicon groups is at most 8, the curable composition tends to give a cured product with good elongation. When the polymer (A) has at least one reactive silicon group, it is possible to obtain a curable composition which gives a cured product having sufficient mechanical strength at a sufficiently workable curing rate.

The polymer (A) preferably constitutes from 40 to 100 mass%, more preferably from 50 to 100 mass%, of the curable resin component (100 mass%).

### < Production of the polymer (A)>

The polymer (A) may be produced, for example, by the following methods [1] to [4].
[1] A method comprising subjecting a polyoxyalkylene chain-containing polymer (pP) having a polyoxyalkylene chain as the main chain and a terminal hydroxy group to a urethane-forming reaction with an isocyanate compound (U) having a reactive silicon group represented by the above-mentioned formula (1) and an isocyanato group.
   In the method, the reactive silicon group attaches at the end of the polyoxyalkylene chain-containing polymer (pP) via a urethane bond to form the polymer (A).
   This method is preferred because it involves only a few steps and produces no impurities as by-products and hence can save a lot of production time and complicated operations such as purification.
   The polyoxyalkylene chain-containing polymer (pP) can be obtained, for example, by ring-opening polymerization of a cyclic ether compound in the presence of a catalyst and an initiator. In such a case, as the initiator, it is possible to use e.g. a hydroxy compound having at least one hydroxy group. The cyclic ether compound may, preferably, be ethylene oxide, propylene oxide, butylene oxide, hexylene oxide or tetrahydrofuran. The catalyst may, for example, be an alkali metal catalyst such as a potassium compound or a cesium compound, a double metal cyanide complex catalyst, a metal porphyrin catalyst or a catalyst of a P=N bond-containing compound type such as a phosphazene compound. A double metal cyanide complex catalyst is preferred because a polymer having a narrow molecular weight distribution and hardly containing low molecular weight molecules, which is favorable for improving the tensile elongation at break of the cured product, can be obtained.
   The double metal cyanide complex is preferably a complex having zinc hexacyanocobaltate as the main component, and especially, an ether and/or alcohol complex is preferred. In such a case, the ether is preferably ethylene glycol dimethyl ether (glyme), diethylene glycol dimethyl ether (diglyme) or the like, particularly preferably glyme from the viewpoint of handling during production of the complex. The alcohol is preferably t-butanol.
   The polyoxyalkylene chain-containing polymer (pP) preferably has a relatively high molecular weight. Specifically, the number average molecular weight (Mn) per hydroxy group of the polyoxyalkylene chain-containing polymer (pP) is preferably from 1,000 to 20,000, particularly preferably 3,000 to 15,000.
   The polyoxyalkylene chain-containing polymer (pP) is preferably a polyoxypropylene polyol having from 2 to 6 hydroxy groups. Among such polyoxypropylene polyols, a polyoxypropylene diol or a polyoxypropylene triol is preferred.
   The isocyanate compound (U) is preferably a compound represented by the following formula (3).

   OCN-R²-SiX¹ₐR¹₃₋ₐ (3)

   The meanings of R¹, X¹ and a in the formula (3) and their preferred examples are the same as those in the formula (1). R² is a divalent C₁₋₁₇ hydrocarbon group.
   The isocyanate compound represented by the formula (3) may be isocyanatomethyltrimethoxysilane, isocyanatomethyltriethoxysilane, isocyanatomethylmethyldimethoxysilane, 1-isocyanatopropylmethyldimethoxysilane, 3-isocyanatopropyltrimethoxysilane, 3-isocyanatopropyltriethoxysilane or the like, and isocyanatomethyltrimethoxysilane, isocyanatomethyltriethoxysilane, isocyanatomethylmethyldimethoxysilane or 3-isocyanatopropyltrimethoxysilane is preferred because a curable composition which cures fast can be obtained.
   In the urethane-forming reaction of the polyoxyalkylene chain-containing polymer (pP) and the isocyanate compound (U), a known urethane-forming catalyst may be used. The reaction is preferably carried out at a temperature of from 20 to 200°C, more preferably from 50 to 150°C, for a few hours.
   In the urethane-forming reaction of the polyoxyalkylene chain-containing polymer (pP) and the isocyanate compound (U), the ratio in moles of the total number of isocyanato groups (NCO) in the isocyanate compound (U) to the total number of hydroxy groups (OH) in the polyoxyalkylene chain-containing polymer (pP) (isocyanato groups/hydroxy groups) is NCO/OH = (0.8/1) to (1.1/1). The NCO/OH (molar ratio) is more preferably (0.85/1) to (1/1).
   When the NCO/OH ratio is at least 0.8/1, good storage stability is attained. Therefore, the NCO ratio is below the above range, it is preferred to additionally react the reaction product with the isocyanate compound (U) or a monoisocyanate compound to consume excess OH groups. When the NCO/OH ratio is 1.1/1 or below, the resulting curable composition is unlikely to thicken because side reactions (leading to formation of allophanates, isocyanurate and the like) during the urethane-forming reaction are suppressed.
[2] The polymer (A) can also be produced by a method comprising reacting the polyoxyalkylene chain-containing polymer (pP) with a polyisocyanate compound such as tolylenediisocyanate and reacting the resulting prepolymer having a terminal isocyanato group (iP) with a silicon compound having an active hydrogen and a reactive silicon group in the molecule.
   In this method, the reactive silicon group attaches at the end of the polyoxyalkylene chain-containing polymer (pP) via a linking group containing a urethane bond to form the polymer (A).
   In the urethane-forming reaction of the polyoxyalkylene chain-containing polymer (pP) and the polyisocyanate compound, the ratio in moles of the total number of isocyanato groups (NCO) in the polyisocyanate compound to the total number of hydroxy groups (OH) in the polyoxyalkylene chain-containing polymer (pP) (isocyanato groups/hydroxy groups) is NCO/OH = (1.5/1) to (2.5/1). The NCO/OH (molar ratio) is more preferably (1.7/1) to (2.0/1).
   When the NCO/OH ratio is at least 1.5/1, good storage stability is attained. When the NCO/OH ratio is 2.5/1 or below, the resulting curable composition is unlikely to viscous because side reactions during the urethane-forming reaction are suppressed.
   In the method, as the silicon compound, a compound represented by the following formula (4) may, for example, be used.

   W-R³-SiX¹ₐR¹₃₋ₐ (4)

   The meanings of R¹, X¹ and a in the formula (4) and their preferred examples are the same as those in the formula (1). R³ is a divalent C₁₋₁₇ hydrocarbon group, and W is a substituent having an active hydrogen. Specific preferred examples of W include a hydroxy group, a carboxy group, a mercapto group and a primary or secondary amino group. In the method, the reactive silicon group is introduced by the reaction of the terminal isocyanato group of the prepolymer (iP) with the substituent W containing an active hydrogen.
   Specific examples of the silicon compound represented by the formula (4) include N-(2-aminoethyl)-3-aminopropylmethyldimethoxysilane (such as KBM602 (product name) manufactured by Shin-Etsu Chemical Co., Ltd.) and N-phenyl-3-aminopropyltrimethoxysilane (such as KBM573 (product name) manufactured by Shin-Etsu Chemical Co., Ltd.).
   The silicon compound to be used in the method can also be obtained by reacting a first compound having at least one organic group selected from primary amino groups, secondary amino groups, acryloyl groups, hydroxy groups, epoxy groups and mercapto groups and a reactive silicon group (such as N-(2-aminoethyl)-3-aminopropylmethyldimethoxysilane) with a second organic compound which can form a compound having a secondary amino group or a hydroxy group upon reaction with the organic group (such as 2-ethylhexyl acrylate), for example, as disclosed in JP-A-11-100427.
[3] The polymer (A) can also be produced by a method comprising reacting a prepolymer (uP) having a polyoxyalkylene chain, a urethane bond and an unsaturated terminal group with a hydrosilyl compound represented by the following formula (5).
   In the method, the reactive silicon group attaches to a monovalent group derived from the unsaturated group at the terminal of the prepolymer having a urethane bond to form the polymer (A).

   HSiX¹ₐR¹₃₋ₐ (5)

   The meanings of R¹, X¹ and a in the formula (5) and their preferred examples are the same as those in the formula (1).
   The prepolymer (uP) is obtained, for example, by reacting a polyoxyalkylene chain-containing polymer (pP) with a compound having an isocyanato group and an unsaturated group. In the reaction, the hydroxy group in the polyoxyalkylene chain-containing polymer (pP) reacts with the isocyanate to form a urethane bond.
   The reaction of the prepolymer (uP) with the hydrosilyl compound is preferably carried out in the presence of a catalyst such as a platinum catalyst, a rhodium catalyst, a cobalt catalyst, a palladium catalyst or a nickel catalyst. Among them, a platinum catalyst such as chloroplatinic acid, metallic platinum, platinum chloride or a platinum olefin complex is preferred. The reaction is preferably carried out at 30 to 150°C, preferably at 60 to 120°C, for a few hours.
[4] The polymer (A) can also be produced by a method comprising reacting the prepolymer (uP) with a mercapto compound represented by the following formula (6).
   In the method, the reactive silicon group attaches to a monovalent group derived from the unsaturated group at the terminal of the prepolymer (uP) having a urethane bond via a linking group (-S-R⁴-) derived from the mercapto compound to form the polymer (A).

   HS-R⁴-SiX¹ₐR¹₃₋ₐ (6)

   The meanings of R¹, X¹ and a in the formula (6) and their preferred examples are the same as those in the formula (1). R⁴ is a C₁₋₁₇ divalent hydrocarbon group. The mercapto compound represented by the formula (6) may, for example, be 3-mercaptopropyltrimethoxysilane or 3-mercaptopropyltriethoxysilane.
   The reaction of the prepolymer (uP) with the mercapto compound may be suitably carried out in the presence of a polymerization initiator such as a radical generator. The reaction may be triggered by radioactive irradiation or heating instead of using a polymerization initiator. The polymerization initiator may be a polymerization initiator of the peroxide type, the azo type or the redox type or may be a metal compound catalyst. Specific preferred examples of the polymerization initiator include 2,2'-azobisisobutyronitrile, 2,2'-azobis-2-methylbutyronitrile, benzoyl peroxide, t-alkylperoxyester, acetyl peroxide and diisopropyl peroxycarbonate. The reaction is preferably carried out at 20 to 200°C, preferably at 50 to 150°C, for a few to several tens hours.
   In the present invention, the number average molecular weight per terminal of the polymer (A) is preferably from 1,000 to 20,000, particularly preferably from 3,000 to 15,000, because the tensile strength at break and elongation at break of the cured product improve.
   When the number average molecular weight per terminal of the polymer (A) is 20,000 or below, the extrudability improves, and the curable composition makes a workable sealant or adhesive. On the other hand, when the number average molecular weight per terminal of the polymer (A) is 1,000 or above, the composition shows good curability.
   The properties of the curable composition can be controlled by adjusting the molecular weight distribution (Mw/Mn) of the polymer (A). The Mw/Mn of the polymer (A) can be adjusted by the type and amount of the polymerization catalyst used to obtain the polyoxyalkylene chain-containing polymer (pP) from which it is prepared and by optimization of the conditions for polymerization of a cyclic ether, or by use of a mixture of at least two species of the polymer (A).
   When the strength of the cured product of the curable composition is important, a polymer (A) with a smaller Mw/Mn is preferred because a stronger cured product with a higher elongation at break and a comparable elastic modulus would be obtained. It is especially preferred that the Mw/Mn of the polymer (A) is less than 1.6. A polymer (A) having a Mw/Mn less than 1.6 contains less of low molecular weight polymer components and hence has a lower viscosity than a polymer (A) having the same Mn and a Mw/Mn of at least 1.6, and can give a curable composition with good handleability which can give a cured product having greater tensile elongation at break and greater tensile strength at break. For similar reasons, it is more preferred that the Mw/Mn is at most 1.5, particularly at most 1.4. A polymer (A) having a small Mw/Mn is preferably obtained by introducing a reactive silicon group into a polyoxyalkylene chain-containing polymer (pP) having a desired Mw/Mn by polymerization of a cyclic ether catalyzed by a double metal cyanide complex in the presence of an initiator, as mentioned above.
   On the other hand, when it is important to obtain a slump resistant curable composition for good workability, a polymer (A) with a Mw/Mn of at least 1.6 is preferred. Slump is a gravitational sag of a sealant in a vertical joint, as described in JIS 5758 (1997 edition).

### <Acrylic polymer (D)>

The curable resin component in the present invention may contain, in addition to the polymer (A), an acrylic polymer (D) having a reactive silicon group represented by the following formula (7) and containing an alkyl (meth)acrylate monomer unit:

-SiX¹_{b}R¹_{3-b} (7)

wherein R⁵ is a monovalent C₁₋₂₀ organic group, X⁵ is a hydroxy group or a hydrolyzable group, and b is an integer of from 1 to 3, provided that when a plurality of R⁵s are present, they may be the same or different from one another, and when a plurality of X⁵s are present, they may be the same or different from one another.

The acrylic polymer (D) contains alkyl (meth)acrylate monomer units as an essential component. It may be a polymer containing only alkyl (meth)acrylate monomer units as the monomer units or a polymer further containing different unsaturated group-containing monomer units. Here, a polymer containing an alkyl (meth)acrylate monomer units means a polymer having repeating units derived from an alkyl (meth)acrylate. The acrylic polymer (D) can be obtained usually by polymerization of unsaturated group-containing monomer(s) comprising an alkyl (meth)acrylate as an essential component. Herein, an unsaturated group-containing monomer means a polymerizable compound having an unsaturated bond (preferably a carbon-carbon double bond), and an alkyl (meth)acrylate means an alkyl acrylate or an alkyl methacrylate or a mixture of them.

The type of number of the alkyl (meth)acrylate monomer units in the acrylic polymer (D) are not limited.

The acrylic polymer (D) preferably contains an alkyl (meth)acrylate monomer represented by the following formula (8), as monomer units.

CH₂=CR⁶COOR⁷ (8)

In the formula (8), R⁶ is a hydrogen atom or a methyl group, and R⁷ is an alkyl group which may be substituted with "a non-alkyl hydrocarbon group".

R⁷may be a linear or branched alkyl group or an alkyl group having a cyclic structure such as a cycloalkyl group. R⁷ may also be an alkyl group having at least one hydrogen atoms substituted with at least one "non-alkyl hydrocarbon group".

The acrylic polymer (D) may contain only one or more alkyl (meth)acrylates represented by the formula (8) as monomer units or further contain one or more other unsaturated group-containing monomers as monomer units. The proportion of monomer units derived from alkyl (meth)acrylates represented by the formula (8) to the entire acrylic polymer (D) is preferably at least from 50 to 100 mass%, more preferably at least from 70 to 100 mass%.

The acrylic polymer (D) is preferably a polymer (D-1) containing alkyl (meth)acrylate monomer units having a C₁₋₈ alkyl group as R⁷ and alkyl (meth)acrylate monomer units having an alkyl group having at least 10 carbon atoms as R⁷, or a polymer (D-2) containing alkyl (meth)acrylate monomer units having a C₁₋₂ alkyl group as R⁷ and alkyl (meth)acrylate monomer units having an C₃₋₁₀, preferably C₃-₆, alkyl group as R⁷. Both the polymer (D-1) and (D-2) are compatible with the polymer (A), as the polymer (D). Therefore, use of the (D-1) and/or (D-2) improves the post-cure properties such as mechanical strength of the curable composition.

In the polymer (D-1), the alkyl (meth)acrylate monomer having an alkyl group having at least 10 carbon atoms is preferably an alkyl (meth)acrylate monomer having a C₁₀₋₃₀ alkyl group, more preferably an alkyl (meth)acrylate monomer having a C₁₀₋₂₂ alkyl group.

Specific examples of the alkyl (meth)acrylate monomer include methyl (meth)acrylate, ethyl (meth)acrylate, propyl (meth)acrylate, n-butyl (meth)acrylate, isobutyl (meth)acrylate, tert-butyl (meth)acrylate, n-hexyl (meth)acrylate, n-heptyl (meth)acrylate, isoheptyl (meth)acrylate, n-octyl (meth)acrylate, 2-ethylhexyl (meth)acrylate, isooctyl (meth)acrylate, n-nonyl (meth)acrylate, isononyl (meth)acrylate, cyclohexyl (meth)acrylate, decyl (meth)acrylate, dodecyl (meth)acrylate, tetradecyl (meth)acrylate, hexadecyl (meth)acrylate, octadecyl (meth)acrylate, eicosanyl (meth)acrylate, docosanyl (meth)acrylate and hexacosanyl (meth)acrylate.

When a strong cured product is required as an adhesive, methyl (meth)acrylate is preferred. When a flexible cured product is required as a sealant, n-butyl (meth)acrylate is preferred. When better compatibility with the polymer (A) is required, 2-ethylhexyl (meth)acrylate containing more carbon atoms is preferred.

In the polymer (D-1), the alkyl (meth)acrylate monomer having a C₁₋₈ alkyl group/the alkyl (meth)acrylate monomer having an alkyl group having at least 10 carbon atoms (mass ratio) is preferably from 95/5 to 40/60.

In the polymer (D-2), the alkyl (meth)acrylate monomer having a C₁₋₂ alkyl group/the alkyl (meth)acrylate monomer having an C₃₋₁₀ alkyl group (mass ratio) is preferably from 97/3 to 50/50.

The polymer (D) may be a copolymer containing other acrylic monomers such as those mentioned below in addition to an alkyl (meth)acrylate monomer represented by the formula (8). Such (meth)acrylates include methacrylic acid, a hydroxyalkyl (meth)acrylate such as hydroxyethyl (meth)acrylate; an isocyanatoalkyl (meth)acrylate such as isocyanatoethyl (meth)acrylate; a phenoxyalkyl (meth)acrylate such as 2-phenoxyethyl (meth)acrylate; a (meth)acrylate having a (hydrogenated)furfuryl group such as furfuryl (meth)acrylate or tetrahydrofurfuryl (meth)acrylate; a (meth)acryloyloxyalkylalkoxysilane such as 3-methacryloyloxypropyltrimethoxysilane; and a methacrylate of polyalkylene oxide monool such as glycidyl (meth)acrylate or methoxypolyethylene glycol (meth)acrylate.

The acrylic polymer (D) may contain monomer units derived from an unsaturated group-containing monomer other than those mentioned above. Such an unsaturated group-containing monomer may, for example, be an N-substituted or N,N-substituted (meth)acrylamide such as N,N-dimethylacryloamide; an unsaturated glycidyl ether such as vinyl glycidyl ether, allyl glycidyl ether or methallyl glycidyl ether; a glycidyl ester of an unsaturated monocarboxylic acid such as glycidyl crotonate, glycidyl cinnamate or glycidyl vinylbenzoate; a monoalkyl monoglycidyl ester or diglycidyl ester of an unsaturated dicarboxylic acid; a styrene monomer such as styrene, a-methylstyrene or chlorostyrene; a cyano group-containing monomer such as acrylonitrile or 2,4-dicyanobutene-1; a vinyl ester monomer such as vinyl acetate or vinyl propionate; a diene monomer such as butadiene, isoprene or chloroprene; an olefin; a halogenated olefin; an unsaturated ester; or a vinyl ether.

The acrylic polymer (D) can be obtained by radical, anionic or cationic polymerization of such unsaturated group-containing monomers as those mentioned above containing an alkyl (meth)acrylate monomer as an essential component. Particularly preferred is radical polymerization in solution, in emulsion, in suspension or in bulk.

When the acrylic polymer (D) is produced by radical polymerization, a polymerization initiator is usually added as a radical generator to the unsaturated group-containing monomer(s). As such a polymerization initiator, those previously mentioned for the reaction of a polyoxyalkylene chain-containing polymer having an unsaturated group with a mercapto compound may be used. Further, when activation is carried out by radioactive irradiation or heating, a polymerization initiator is not necessarily required. Further, the reaction is preferably carried out at a temperature of from 20 to 200°C, more preferably from 50 to 150°C, for from a few hours to several tens hours.

In the case of radical polymerization, it is possible to use a chain transfer agent for the purpose of controlling the molecular weight, etc. The chain transfer agent may, for example, be an alkyl mercaptan such as n-dodecyl mercaptan, t-dodecyl mercaptan or n-butyl mercaptan, or an a-methylstyrene dimer.

The acrylic polymer (D) may preliminarily be prepared by radical polymerization or the like as mentioned above, and then mixed with the other components of the curable composition. Alternatively, the acrylic polymer (D) may be formed by polymerizing unsaturated group-containing monomer(s) in the presence of other components of the curable composition. In such a case, it is preferred to polymerize the unsaturated group-containing monomer(s) in the presence of the polymer (A) because it saves a mixing step and the acrylic polymer (D) is dispersed uniformly in the polymer (A) easily. Further, during the polymerization, part of the unsaturated group-containing monomer(s) may undergo graft polymerization with the polymer (A) having a reactive silicon group. In such a case, the graft polymerization product functions as a compatibilizing agent to further improve the dispersibility of the acrylic polymer (D).

The acrylic polymer (D) has at least one reactive silicon group represented by the formula (7) at least at its terminal or in the side chain.

The definition and preferred examples of R⁵ in the formula (7) are the same as those of R¹ in the formula (1).

The definition and preferred examples of X⁵ in the formula (7) are the same as those of X¹ in the formula (1).

The definition and preferred examples of b in the formula (7) are the same as those of a in the formula (1).

In the curable composition of the present invention, the reactive silicon group of the polymer (A) and the reactive silicon group of the acrylic polymer (D) may be the same or different.

The reactive silicon group can be introduced in the polymer (D), for example, by the method (i), (ii), (iii) or (iv) mentioned below or a combination of two or more of them.
(i) Copolymerization of an unsaturated group-containing monomer having a reactive silicon group represented by the formula (7) during the synthesis of the acrylic polymer (D) by polymerizing unsaturated group-containing polymer(s).
(ii) Synthesis of the acrylic polymer (D) by polymerization of unsaturated group-containing polymer(s) using a chain transfer agent having a reactive silicon group represented by the formula (7).
(iii) Synthesis of the acrylic polymer (D) by polymerization of unsaturated group-containing polymer(s) using an initiator having a reactive silicon group represented by the formula (7).
(iv) Synthesis of an acrylic polymer having a functional group such as a hydroxy group, an amino group, a carboxyl group, an isocyanato group or an epoxy group followed by a reaction with a compound having a reactive silicon group represented by the formula (7).

The unsaturated group-containing monomer having a reactive silicon group represented by the formula (7), which is used in the method (i), is preferably a compound represented by the following formula (9):

R⁸-SiX⁵_{b}R⁵_{3-b} (9)

In the formula (9), R⁸ is a monovalent organic group having an unsaturated group. R⁵, X⁵ and b in the formula (9) have the same meanings as in the formula (7).

Specific preferred examples of the compound represented by the formula (9) include a vinylsilane such as vinylmethyldimethoxysilane, vinylmethyldiethoxysilane, vinylmethyldichlorosilane, vinyltrimethoxysilane, vinyltriethoxysilane, vinyltrichlorosilane or tris(2-methoxyethoxy)vinylsilane; and a (meth)acryloyloxysilane such as 3-acryloyloxypropylmethyldimethoxysilane, 3-methacryloyloxypropylmethyldimethoxysilane, 3-acryloyloxypropyltrimethoxysilane, 3-acryloyloxypropyltriethoxysilane, 3-methacryloyloxypropyltrimethoxysilane or 3-methacryloyloxypropyltriethoxysilane. In view of curing rate, vinyltrimethoxysilane, 3-acryloyloxypropyltrimethoxysilane or 3-methacryloyloxypropyltrimethoxysilane is preferred. In view of elongation, 3-acryloyloxypropylmethyldimethoxysilane, 3-methacryloyloxypropylmethyldimethoxysilane or 3-methacryloyloxypropyltriethoxysilane is preferred.

In the method (i), the unsaturated group-containing monomer having a reactive silicon group represented by the formula (7) is used preferably in an amount of from 0.01 to 20 parts by mass per 100 parts by mass of the total monomers to be used to synthesize the acrylic polymer (D).

The chain transfer agent having a reactive silicon group represented by the formula (8), to be used in the method (ii) is preferably a compound represented by the following formula (10) or a compound represented by the following formula (11).

HS-R⁹-SiX⁵_{b}R⁵_{3-b} (10)

In the formula (10), R⁹ is a single bond or a divalent organic group, and R⁵, X⁵ and b have the same meanings as in the formula (7).

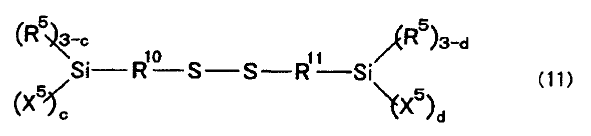

In the formula (11), R⁵ and X⁵ have the same meanings as in the formula (7), each of R¹⁰ and R¹¹ is a single bond or a divalent organic group, and each of c and d is independently an integer of from 1 to 3.

Specific preferred example of the compound represented by the formula (10) include a mercapto compound having a reactive silicon group such as 3-mercaptopropyltrimethoxysilane, 3-mercaptopropylmethyldimethoxysilane, 3-mercaptopropyltriethoxysilane, 3-mercaptopropylmethyldiethoxysilane or 3-mercaptopropyltriisopropenyloxysilane. Specific preferred examples of the compound represented by the formula (11) include (CH₃O)₃Si-S-S-Si(OCH₃)₃ and (CH₃O)₃Si-(CH₂)₃-S-S-(CH₂)₃-Si(OCH₃)₃.

The number average molecular weight (Mn) of the acrylic polymer (D) is preferably from 500 to 100,000, more preferably from 1,000 to 100,000. If the Mn of the acrylic polymer (D) exceeds 100,000, the workability tends to be poor, and if the Mn is less than 500, the tensile elongation at break after curing tends to be low.

It is considered that as the curable composition cures, the reactive silicon group of the acrylic polymer (D) reacts with the reactive silicon group of the polymer (A) forming a bond, and thereby a cured product having improved mechanical strength is obtained after the curing, and the curable composition and the cured product have improved durability.

Especially, the acrylic polymer (D) preferably has a reactive silicon group at its terminal because a cured product with an improved elongation will be obtained. Such an acrylic polymer (D) having a reactive silicon group at its terminal can be obtained by e.g. the method (ii) or the method (iii).

Incorporation of the acrylic polymer (D) in the curable composition of the present invention improves the mechanical strength of the cured product obtained after curing and the durability of the curable composition and the cured product.

The curable resin component in the present invention preferably consists essentially of the polymer (A) or essentially of the polymer (A) and the acrylic polymer (D).

When the acrylic polymer (D) is incorporated in the curable composition of the present invention, it is incorporated preferably in an amount of from 5 to 60 mass%, more preferably from 20 to 50 mass%, per 100 mass% of the curable resin component. When the content of the acrylic polymer (D) is at least 5 mass%, the incorporation of the component (D) has sufficient effect, and when it is at most 60 mass%, a curable composition with a proper viscosity and good workability is obtained.

### <Polymer (E)>

The curable composition of the present invention may contain an oxyalkylene polymer (E) having a reactive silicon group represented by the formula (1) and having no urethane bond in the molecule, in addition to the polymer (A). The polymer (A) and the oxyalkylene polymer (E) in the curable composition may have the same or different reactive silicon groups.

The oxyalkylene polymer (E) having no urethane bond in the molecule (herein sometimes referred to simply as the polymer (E)) is a polymer having a polyoxyalkylene chain similar to that in the polymer (A).

The polymer (E) has a reactive silicon group represented by the formula (1) as a pendant or a terminal group, preferably as a terminal group. The reactive silicon group may be bonded to the polyoxyalkylene chain directly or via another organic group.

The reactive silicon group represented by the formula (1) is preferably bonded to the polyoxyalkylene chain via a divalent organic group. In this case, it follows that the polymer (E) has a group represented by the following formula (12).

-R¹²-SiX¹aR¹₃₋ₐ (12)

The meanings of R¹, X¹ and a in the formula (12) and their preferred examples are the same as those in the formula (1), and R¹² is a divalent organic group. R¹² is preferably a C₁₋₁₀ alkylene group which may contain an ether bond, an ester bond or a carbonate bond.

The polymer (E) preferably has from 1 to 8, more preferably from 1.1 to 5, particularly preferably from 1.1 to 3, reactive silicon groups represented by the formula (1) per molecule. When the number of reactive silicon groups is at most 8, the curable composition gives a cured product with good tensile elongation at break after curing. The presence of at least one reactive silicon group in the polymer (E) secures sufficient hardness and curability.

The polymer (E) can be produced, for example, by introducing a reactive silicon group into a polyoxyalkylene chain-containing polymer (P) having a polyoxyalkylene chain as the main chain and having a functional group such as an unsaturated group for introduction of the reactive silicon group.

Among such polyoxyalkylene chain-containing polymers (P), a polyoxyalkylene chain-containing polymer (pP) having a hydroxy group at a terminal and otherwise having the same structure as the polymer (E) can be obtained, in the same manner as the polyoxyalkylene chain-containing polymer (pP) used for production of the polymer (A).

The polyoxyalkylene chain-containing polymer (pP) having a hydroxy group preferably has a relatively high molecular weight. Specifically, the number average molecular weight (Mn) per hydroxy group of the polyoxyalkylene chain-containing polymer (pP) is from 1,000 to 20,000, particularly preferably from 3,000 to 15,000.

Into the polyoxyalkylene chain-containing polymer (P) as the starting material, reactive silicon groups represented by the above formula (1) are preferably introduced by the following methods (a) and (b).

The "polyoxyalkylene chain-containing polymer (pP) having a hydroxy group" used in the following methods is preferably a polyoxypropylene polyol having from 2 to 6 hydroxy groups. Among such polyoxypropylene polyols, a polyoxypropylene diol or a polyoxypropylene triol is preferred.
(a): Reaction of a hydrosilyl compound represented by the following formula (13) with a polyoxyalkylene chain-containing polymer having an unsaturated group.

   HSiX¹ₐR¹₃₋ₐ (13)

   The meanings of R¹, X¹ and a in the formulae (13) and their preferred examples are the same as those in the formula (1).
   The polyoxyalkylene chain-containing polymer having an unsaturated group can be obtained, for example, by reacting a compound having a functional group reactive with a hydroxy group and having an unsaturated group with a polyoxyalkylene chain-containing polymer (pP) having a hydroxy group. In this case, the unsaturated group attaches to the polyoxyalkylene chain via an ether bond, an ester bond, a urethane bond or a carbonate bond. Alternatively, a polyoxyalkylene chain-containing polymer having a pendant unsaturated group can be obtained during the polymerization of an alkylene oxide by copolymerizing an unsaturated group-containing epoxy compound such as allyl glycidyl ether. As a polyoxyalkylene chain-containing polymer, a polyoxyalkylene having an unsaturated group such as an allyl-terminated polyoxypropylene monool may be used suitably.
   The reaction of the polyoxyalkylene chain-containing polymer having an unsaturated group and the hydrosilyl compound is carried out in the same manner as described for the polymer (A).
(b): Reaction of a polyoxyalkylene chain-containing polymer having an unsaturated group with a mercapto compound represented by the following formula (14).

   HS-R⁸-SiX¹ₐR¹₃₋ₐ (14)

   The meanings of R¹, X¹ and a in the formula (14) and their preferred examples are the same as those in the formula (1). R⁸ is a C₁₋₁₇ divalent hydrocarbon group. The mercapto compound represented by the formula (14) may, for example, be 3-mercaptopropyltrimethoxysilane or 3-mercaptopropyltriethoxysilane.
   As the polyoxyalkylene chain-containing polymer having an unsaturated group, those mentioned above for the method (a) may be used.
   The reaction of the polyoxyalkylene chain-containing polymer having an unsaturated group with the mercapto compound is carried out in the same manner as described for the polymer (A).

In the present invention, the number average molecular weight per terminal of the polymer (E) is preferably from 1,000 to 20,000, particularly preferably from 3,000 to 15,000, because the tensile stress at break and elongation at break of the cured product improve. The Mn of the polymer (E) is measured before curing. When the number average molecular weight per terminal of the polymer (E) is 20,000 or below, the extrudability improves, and the curable composition makes a workable sealant or adhesive. On the other hand, when the number average molecular weight per terminal of the polymer (E) is 1,000 or above, the curable composition has a sufficiently workable curing rate.

The physical properties of the curable composition can be controlled by adjusting the molecular weight distribution (Mw/Mn) of the polymer (E).

When the strength of the cured product of the curable composition is important, a polymer (E) with a smaller Mw/Mn is preferred. It is especially preferred that the Mw/Mn of the polymer is less than 1.6, preferably at most 1.5, most preferably at most 1.4. A polymer (E) having a Mw/Mn less than 1.6 contains less of low molecular weight polymer components and hence has a lower viscosity than a polymer (E) having the same Mn and a Mw/Mn of at least 1.6, and can give a curable composition with good handleability which can give a cured product having greater tensile elongation at break and greater tensile strength at break. A polymer (E) having a small Mw/Mn is preferably obtained by introducing a reactive silicon group into a polyoxyalkylene chain-containing polymer having a desired Mw/Mn obtained by polymerization of a cyclic ether catalyzed by a double metal cyanide complex in the presence of an initiator, as mentioned above, by modifying the terminal of t eh polymer.

On the other hand, when it is important to obtain a slump resistant curable composition for good workability, a polymer (E) with a Mw/Mn of at least 1.6 is preferred.

Incorporation of the polymer (E) in the curable composition of the present invention enables the composition to give a flexible cured product with good tensile properties.

When the polymer (E) is incorporated in the curable composition of the present invention, it is incorporated preferably in an amount of from 0 to 60 mass%, more preferably from 0 to 50 mass%, per 100 mass% of the curable resin component.

If the content of the polymer (E) is 60 mass% or higher, the curable composition tends to have a high viscosity and poor workability when a silicate mineral (B) or a calcined silicate mineral (C) is incorporated as a filler.

### < Silicate mineral (B) calcined silicate mineral (C) >

The curable composition of the present invention contains at least one silicate mineral (X) selected from the group consisting of a silicate mineral (B) represented by the following formula (2) (hereinafter sometimes referred to as component (B)) and a calcined silicate mineral (C) obtained by firing the silicate mineral at 350 to 1,200°C (hereinafter sometimes referred to as component (C)) as a filler:

Al₂0_{3·}2SiO₂·nH₂O (2)

In the formula (2), n represents the average number of molecules of water of crystallization and is an integer of from 0 to 4.

In the present invention, incorporation of the silicate mineral (X) as a filler covers incorporation of the silicate mineral (B), incorporation of the calcined silicate mineral (C) and incorporation of both the silicate mineral (B) and the calcined silicate mineral (C).

The silicate mineral (B) in the present invention is a layered silicate mineral made of a combination of laminar sheets (tetrahedral sheets) composed of tetrahedral structural units each consisting of one silicon atom and surrounding four oxygen atoms and laminar sheets (trioctahedral sheets) composed of octahedra each consisting of one aluminum atom bonded to hydroxy groups, and its chemical formula is basically represented by the above formula (2). The silicate mineral (B) may contain traces of impurities such as Fe, Mg and Ca to replace part of the formula (2) as long as the silicate mineral (B) has the above-mentioned structure.

The calcined silicate mineral (C) in the present invention is obtained by calcining the silicate mineral (B) at 350 to 1,200°C.

The curable composition of the present invention preferably contains at least the calcined silicate mineral (C) because when the calcined silicate mineral (C) is incorporated, the curable composition is less viscous and can give a stronger cured product when the silicate mineral (B) is incorporated.

Specific examples of the silicate mineral (B) represented by the formula (2) include kaolinite [Al₂O₃·2SiO₂·2H₂O], dickite [Al₂O₃·2SiO₂·2H₂O], nacrite [Al₂O₃·2SiO₂·2H₂O] and halloysite [Al₂O₃·2SiO₂·nH₂O], and it is preferred to use kaolinite.

The kaolinite to be used in the present invention is usually what is widely used as wet kaolin or dry kaolin (hereinafter sometimes referred to as uncalcined kaolin). Wet kaolin is kaolin purified and decolorized in water for removal of impurities and characteristically has a narrow particle size distribution because its particle size is controlled by wet classification. Dry kaolin is kaolin the particle size of which is controlled by purification and classified by air blow.

Among the uncalcined kaolin is what is called kaolin hard clay (hereinafter sometimes referred to as kaolin hard clay) in which small-sized particles constitute a large fraction of it. Generally, kaolin hard clay contains many small-sized particles.

Use of kaolin hard clay is considered to reinforce the curable composition because it contains many small-sized particles. In the present invention, as the kaolinite, both commercial uncalcined kaolin and commercial kaolin clay may be used.

The silicate mineral (B) in the present invention, natural or synthetic, is commercially available. For example, examples of uncalcined kaolin include ASP 900, ASP 400 and ASP 400P manufactured by Takehara Kagaku Kogyo Co., Ltd. and the like, and examples of kaolin hard clay include ST-CROWN manufactured by Shiraishi Calcium Kaisha, Ltd. and the like.

The calcined silicate mineral (C) is obtained by calcining the silicate mineral (B) at 350 to 1,200°C. In general, as the silicate mineral (B) is heated, the silicate mineral (B) starts to shrink, releasing water of crystallization at around 400°C and the silicate and alumina start to combine destroying its layered structure at around 900°C.

The calcined silicate mineral (C) in the present invention may be a calcination product which has released water of crystallization or has undergone the crystal structure change caused by combination of the silicate and alumina, as long as a workable curable composition with a low viscosity which can give mechanically strong cured product is obtained. Therefore, the calcined silicate mineral (C) may be a calcinations product obtained at a calcinations temperature of from 350 to 1,200°C, preferably at 800 to 1,100°C.

The calcination atmosphere is preferably air or an inert gas, preferably air, though it is not particularly restricted.

Although the calcination time is not particularly limited, the calcination time at 350 to 1,200°C is preferably from 1 minute to 24 hours, preferably from 10 minutes to 10 hours, more preferably from 15 minutes to 5 hours. The calcinations temperature and the calcination time should be such that the silicate mineral (B) does not melt.

The calcined silicate mineral (C) may have the structure of the silicate mineral (B) represented by the formula (2) which has lost part or all of the water of crystallization or may have a crystal structure having deformed from that of the silicate mineral (B) represented by the formula (2).

As the calcined silicate mineral (C) to be used in the present invention, calcined kaolinite, calcined nacrite or calcined halloysite may be mentioned, and calcined kaolinite (hereinafter referred to also as calcined kaolin) is preferred. In general, calcined kaolin is obtained by calcination of a silicate mineral (B) at around 800 to 1,000°C. As the calcined silicate mineral (C) to be used in the present invention, calcined kaolin is preferred because it secures sufficient mechanical strength and suppresses increase of the viscosity of a cured product. The calcined silicate mineral (C) is commercially available as ICEBERG K manufactured by Shiraishi Calcium Kaisha, Ltd.; SATINTONE 5, SATINTONE OP or SATINTONE W manufactured by Hayashi-Kasei Co., Ltd., or the like.

The silicate mineral (X) may have a surface treated with a surface finish. Namely, a silicate mineral (B) which has partly or entirely been treated with a surface finish, a calcined silicate mineral (C) which has partly or entirely been treated with a surface finish, or a mixture of a silicate mineral (B) and a calcined silicate mineral (C) treated with a surface finish may be used.

The surface finish is a compound having an organic functional group which can bond to the organic moiety of the polymer (A) and a hydrolysable group and is preferably a silane coupling agent.

Treatment with a surface finish enables the silicate mineral (X) to show better dispersibility when added to the polymer (A) and improves the curing rate of the curable composition.

As the silane coupling agent, a (meth)acryloyloxysilane such as 3-methacryloyloxypropyltrimethoxysilane, 3-acryloyloxypropyltrimethoxysilane or 3-methacryloyloxypropylmethyldimethoxysilane; an amino-containing silane such as 3-aminopropyltrimethoxysilane, 3-aminopropyltriethoxysilane, 3-aminopropylmethyldimethoxysilane, N-(2-aminoethyl)-3-aminopropyltrimethoxysilane, N-(2-aminoethyl)-3-aminopropylmethyldimethoxysilane or N-(2-aminoethyl)-3-aminopropyltriethoxysilane; a mercapto-containing silane such as 3-mercaptopropyltrimethoxysilane, 3-mercaptopropyltriethoxysilane, 3-mercaptopropylmethyldimethoxysilane or 3-mercaptomethyldimethoxysilane; or an epoxy-containing silane such as 3-glycidyloxypropylmethyldimethoxysilane or 3-glycidyloxypropyltriethoxysilane or the like may be mentioned.

Silicate minerals (B) treated with a surface finish and calcined silicate minerals (C) treated with a surface finish are commercially available. As silicate minerals (B) treated with a surface finish, ST-301 and ST-309 manufactured by Shiraishi Calcium Kaisha, Ltd. may, for example, be mentioned.

As calcined silicate minerals (C) treated with a surface finish, ST-100 and ST-KE manufactured by Shiraishi Calcium Kaisha, Ltd.; and TRANSLINK 37, TRANSLINK 77, TRANSLINK 445 and TRANSLINK 555 manufactured by Hayashi-Kasei Co., Ltd. may, for example, be mentioned.

The silicate mineral (X) to be used in the present invention preferably has an average particle size of from 0.01 to 25 µm. A silicate mineral (X) having an average particle size of at least 0.01 µm is unlikely to increase the viscosity of the curable composition when added. When the silicate mineral (X) has an average particle size of at most 25 µm, the curable composition tends to give a cured product having sufficient mechanical strength. The average particle size is more preferably within the range of from 0.1 to 10 µm, particularly preferably within the range of from 0.5 to 8 µm.

Especially, when calcined kaolin is used, the average particle size is preferably from 0.1 to 10 µm, more preferably from 0.5 to 8 µm. When uncalcined kaolin is used, the average particle size is preferably from 0.1 to 10 µm, particularly preferably from 0.5 to 6 µm. When kaolin hard clay is used, the average particle size is preferably from 0.1 to 5 µm, particularly preferably from 0.1 to 1.5 µm.

Herein, average particle size means a median diameter based on a particle size distribution obtained by laser diffraction scattering analysis, if done, after surface treatment.

As the silicate mineral (B) or the calcined silicate mineral (C), a single species or a combination of two or more species may be used.

The silicate mineral (X) may be used in an amount of from 1 to 300 parts by mass, preferably from 5 to 250 parts by mass, particularly preferably from 10 to 200 parts by mass, per 100 parts by mass of the curable resin composition. When the amount of the silicate mineral (X) is at least 1 part by mass, a cured product having sufficient tensile properties tends to be obtained. When the amount of the silicate mineral (X) is at most 300 parts by mass, the curable composition is likely to have a low viscosity.

### < Additional fillers >

The curable composition of the present invention may contain other fillers in addition to the silicate mineral (X) described above.

Examples of other fillers include calcium carbonate such as heavy calcium carbonate having an average particle size of from 1 to 20 µm, light calcium carbonate produced by sedimentation and having an average particle size of from 1 to 3 µm, colloidal calcium carbonate having a surface treated with an aliphatic acid or a resin acid type organic product, or slight calcium carbonate; fumed silica; precipitated silica; silica fine powder having a silicone-treated surface; silicic anhydride; silicic hydride; carbon black; magnesium carbonate; diatomaceous earth; talc; titanium oxide; bentonite; ferric oxide; zinc oxide; active zinc oxide; a hollow body such as shriasu balloon, perlite, glass balloon, fly ash balloon, alumina balloon, zirconium balloon or carbon balloon; an organic resin hollow body such as phenol resin balloon, epoxy resin balloon, urea resin balloon, polyvinylidene chloride resin balloon, polyvinylidene chloride/acrylic resin balloon, polystyrene balloon, polymethacrylate balloon, polyvinyl alcohol balloon, styrene/acrylic resin balloon or polyacrylonitrile balloon; a powder filler such as resin beads, wood flour, pulp, cotton chip, mica, walnut shell flour, rice hull flour, graphite, aluminum fine powder or flint powder; and a fibrous filler such as glass fiber, glass filament, carbon fiber, kepler fiber or polyethylene fiber.

Such fillers may be used alone or in combination of two or more.

Among them, calcium carbonate is preferred, and it is particularly preferred to use heavy calcium carbonate and colloidal carbonate in combination.

Further, since it is possible to reduce the weight of the curable composition and its cured product, it is preferred to use a hollow body as a filler. Further, by using a hollow body, it is possible to improve the stringiness of the composition and to improve the workability. A hollow body may be used alone, but it may be used in combination with another filler such as calcium carbonate.

Such fillers other than the components (B) and (C) are preferably used in an amount of from 0 to 300 parts by mass, more preferably from 0 to 250 parts by mass, particularly preferably from 0 to 200 parts by mass, per 100 parts by mass of the curable resin component. The total amount of the component (B) and other fillers is preferably at most 350 parts by mass, more preferably at most 300 parts by mass, per 100 parts by mass of the curable resin component.

### < Other components >

In addition to the curable resin component and fillers, the curable composition of the present invention may contain, as the case requires, a curing accelerator, a plasticizer, a dehydrator, a thixotropic agent and an age resister, which will be described below.

In addition to them, the curable composition may contain a surface modifier; a solvent; a modulus adjustor such as a compound which forms trimethylsilanol by hydrolysis, such as phenoxytrimethylsilane; an air curing compound such as a wood oil; a photo curing compound such as trimethylolpropane triacrylate; an inorganic pigment such as iron oxide, chromium oxide or titanium oxide; and an organic pigment such as phthalocyanine blue or phthalocyanine green. The use of a pigment is effective not only for coloration but also for the purpose of improving weather resistance. Further, it is also possible to add a known flame retardant or fungicide to the curable composition. A flatting agent used for an application to coating material, may also be added. If necessary, the curable composition may contain other additives than those mentioned above.

### (Curing Accelerator)

As the curing accelerator, for example, a tin compound is mentioned. The tin compound may, for example, be a divalent tin compound such as tin 2-ethylhexanoate, tin naphthenate or tin stearate; or a tetravalent tin compound such as an organic tin carboxylate like a dialkyltin dicarboxylate such as dibutyltin dilaurate, dibutyltin diacetate, dibutyltin monoacetate or dibutyltin maleate, or a dialkoxytin monocarboxylate, a tin chelate compound such as a dialkyltin bisacetylacetonate or a dialkyltin monoacetylacetonate monoalkoxide, a reaction product of a dialkyltin oxide and an ester compound, a reaction product of a dialkyltin oxide and an alkoxysilane compound, or a dialkyltin dialkylsulfide.

The tin chelate compound may, for example, be dibutyltin bisacetylacetonate, dibutyltin bisethylacetoacetate or dibutyltin monoacetylacetonate monoalkoxide.

The reaction product of a dialkyltin oxide and an ester compound may be a liquid tin compound obtained by reacting a mixture of dibutyltin oxide and a phthalate such as dioctyl phthalate or diisononyl phthalate with heating. In such a case, as the ester compound, it is also possible to use an aliphatic or aromatic carboxylate other than phthalates, tetraethylsilicate or its partially hydrolyzed condensate. A compound obtained by reacting or mixing such a tin compound with a low molecular weight alkoxysilane may also be suitably used.

Other than a tin compound, the curing accelerator may, for example, be a divalent bismuth compound such as an organic carboxylic bismuth salt; an acidic compound such as phosphoric acid, p-toluenesulfonic acid, phthalic acid or di-2-ethylhexyl phosphate; an amine compound such as an aliphatic monoamine like as butylamine, hexylamine, octylamine, decylamine, laurylamine or N,N-dimethyloctylamine, an aliphatic polyamine compound like as ethylenediamine, hexamethylenediamine, diethylenetriamine, triethylenetetramine or tetraethylenepentamine, an aromatic amine compound or an alkanolamine; or an organic titanate compound.

A divalent tin compound or a divalent bismuth compound is preferably used in combination with a primary amine compound in order to improve curing acceleration effect. Curing accelerators may be used alone or in combination as a mixture of two or more.

Because the curable composition of the present invention has a suitable curing rate without a curing accelerator, it may contain substantially no curing accelerator. Use of a curing accelerator further improves the curing rate.

When a curing accelerator is used, its amount is preferably from 0.1 to 10.0 parts by mass, more preferably from 0.5 to 5 parts by mass per 100 parts by mass of the curable resin component.

### (Plasticizer)

The plasticizer may, for example, be a phthalate such as dioctyl phthalate, dibutyl phthalate, butyl benzyl phthalate or isononyl phthalate; an aliphatic carboxylate such as dioctyl adipate, diisodecyl succinate, dibutyl sebacate or butyl oleate; an alcoholic ester such as a pentaerythritol ester; a phosphate such as trioctyl phosphate or tricresyl phosphate; an epoxy plasticizer such as epoxidized soybean oil, dioctyl 4,5-epoxyhexahydrophthalate or benzyl epoxystearate; chlorinated paraffin; a polyester plasticizer such as a polyester obtained by reacting a dibasic acid with a divalent alcohol; or a polymer plasticizer such as a polyether like polyoxypropylene glycol or its derivative obtained, for example, by capping the hydroxy groups of polyoxypropylene glycol with an alkyl ether, a polystyrene oligomer such as poly-a-methylstyrene or polystyrene or an oligomer such as , polybutadiene, a butadiene-acrylonitrile copolymer, polychloroprene, polyisoprene, polybutene, hydrogenated polybutene or epoxidized polybutadiene. Such plasticizers may be used in combination of at least two, for example a phthalate and an epoxy plasticizer.

### (Dehydrator)

To the curable composition, in order to further improve the storage stability, a small amount of a dehydrator can be added within such a range that the curability or flexibility is not adversely affected. The dehydrator may, for example, be an alkyl orthoformate such as methyl orthoformate or ethyl orthoformate, an alkyl orthoacetate such as methyl orthoacetate or ethyl orthoacetate, a hydrolyzable organic silicon compound such as methyltrimethoxysilane, vinyltrimethoxysilane or tetramethoxysilane or a hydrolyzable organic titanium compound. Among them, vinyltrimethoxysilane and tetraethoxysilane are particularly preferred from the viewpoint of their costs and effects. Especially when the curable composition is handled as a so-called one-component product containing a curing accelerator packed in a moisture proof container, it is effective to use such a dehydrator.

### (Thixotropic agent)

Incorporation of a thixotropic agent improves the thixotropy of the curable composition. Such a thixotropic agent as a hydrogenated castor oil or fatty acid amide is used in an optional amount.

### (Age resister)

As an age resister, a commonly used antioxidant, ultraviolet absorber or light stabilizer can suitably be used. Specifically, a compound of a hindered amine type, a benzotriazole type, a benzophenone type, a benzoate type, a cyanoacrylate type, an acrylate type, a hindered phenol type, a phosphorus type or a sulfur type can suitably be used as an age resister. Particularly, it is preferred to use at least two of a light stabilizer, an antioxidant and an ultraviolet absorber in combination since each of them can show its effect. Specifically, it is preferred to combine a tertiary or secondary hindered amine type light stabilizer, a benzotriazole type ultraviolet absorber and a hindered phenol and/or phosphite type antioxidant.

### (Tackifier)

Specific examples of tackifiers include an organic silane coupling agent such as a (meth)acryloyloxy-containing silane, an amino-containing silane, an epoxy-containing silane or a carboxy-containing silane; an organic metal coupling agent such as isopropyl tri(N-aminoethyl-aminoethyl)propyl trimethoxy titanate or 3-mercaptopropyl trimethoxy titanate; and an epoxy resin.

Specific examples of amino-containing silanes include 3-aminopropyltrimethoxysilane, 3-aminopropyltriethoxysilane, 3-aminopropylmethyldimethoxysilane, N-(2-aminoethyl)-3-aminopropyltrimethoxysilane, N-(2-aminoethyl-3-aminopropylmethyldimethoxysilane, N-(2-aminoethyl)-3-aminopropyltriethoxysilane, 3-ureidopropyltriethoxysilane, N-(N-vinylbenzyl-2-aminoethyl)-3-aminopropyltrimethoxysilane and 3-anilinopropyltrimethoxysilane.

Specific examples of epoxy resins include a bisphenol A-diglycidyl ether type epoxy resin, bisphenol F-diglycidyl ether type epoxy resin, a tetrabromobisphenol A-glycidyl ether type epoxy resin, a novolac type epoxy resin, a hydrogenated bisphenol A type epoxy resin, a glycidyl ether type epoxy resin of a bisphenol A-propylene oxide adduct, glycidyl 4-glycidyloxybenzoate, diglycidyl phthalate, diglycidyl tetrahydrophthalate, diglycidyl hexahydrophthalate, a diglycidyl ester type epoxy resin, an m-aminophenol type epoxy resin, a diaminodiphenylmethane type epoxy resin, a urethane modified epoxy resin, N,N-diglycidyl aniline, N,N-diglycidyl-o-toluidine, triglycidyl isocyanurate, polyalkylene glycol diglycidyl ether, a glycidyl ether of a polyhydric alcohol (such as glycerol), a hydantoin epoxy resin and an unsaturated polymer (e.g. a petroleum resin) epoxy resin.

When such a silane coupling agent as mentioned above is added to the curable composition, its amount is preferably from 0.1 to 30 parts by mass per 100 parts by mass of the curable resin component.

When such an epoxy resin as mentioned above is added to the curable composition, its amount is preferably at most 100 parts by mass, more preferably from 10 to 80 parts by mass, per 100 parts by mass of the curable resin component.

When applied to an adherend, the curable resin composition of the present invention cures quickly and firmly adheres to the adherend upon reaction with moisture, forming an elastic cured product. The curable composition has a low viscosity and good workability and gives a cured product with excellent mechanical strength. Therefore, it is suitable as a sealing composition such as a sealant as well as an adhesive composition.

### EXAMPLES

Now, the present invention will be described in further detail with reference to Examples of the present invention and Comparative Examples, but it should be understood that the present invention is by no means restricted thereto.

In the following Examples, the weight average molecular weight (Mw), number average molecular weight (Mn) and molecular weight distribution (Mw/Mn) of each polymer were measured by gel permeation chromatography (GPC), specifically speaking, by using serially connected two TSK Multipore H_{XL}-M GPC columns (product name, manufactured by TOSOH CORPORATION and tetrahydrofuran as the mobile phase at 40°C. The Mw, Mn and Mw/Mn calculated as polystyrene were determined by using a calibration curve obtained by using a standard polystyrene having a known molecular weight (product name: PS-2, manufactured by Polymer Laboratories Limited).

### [PRODUCTION EXAMPLES]

Polymers (A1) to (A7) were prepared by synthesis reactions in an inner temperature-adjustable pressure proof rector equipped with a nitrogen supply tube and a stirrer.

Polymers (A1) to (A3) were produced by the method [1] mentioned above, and polymers (A4) was produced by the method [2]. In Production Example 5, an acrylic polymer (A5) was obtained by polymerization in the polymer (A1) obtained by the method [1]. Polymers (A6) and (A7) have no urethane bonds and a polyoxyalkylene chain having reactive silicon groups.

Namely, among polymers (A1) to (A7), only polymers (A1) to (A5) correspond to the polymer (A) of the present invention.

### (PRODUCTION EXAMPLE 1: Production of polymer (A1))

Propylene oxide (hereinafter referred to as "PO") was reacted with polyoxypropylene glycol (Mw: 1,000) as the initiator in the presence of a zinc hexacyanocobaltate-tert-butyl alcohol complex catalyst to obtain a polyoxypropylene diol (hereinafter referred to as "P-1 ") having a number average molecular weight (Mn) of 15,000 and a molecular weight distribution (Mw/Mn) of 1.2.

3,000 g of polymer (P-1) was put in a pressure proof reactor (inner volume 5 L) and dehydrated under reduced pressure at a constant inner temperature of 110°C. Then, the atmosphere in the reactor was replaced by nitrogen gas, 86.1 g of 3-isocyanatopropyltrimethoxysilane (purity 95%) was introduced at a constant inner temperature of 50°C so that the NCO/OH would be 0.97. Then, the urethane-forming reaction of polymer (P-1) and 3-isocyanatopropyltrimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having trimethoxysilyl terminal groups (hereinafter referred to as "polymer (A1)").

The Mn and Mw/Mn of polymer (A1) were 16,100 and 1.38, respectively.

### (PRODUCTION EXAMPLE 2: Production of polymer (A2))

A polyoxypropylene diol (polymer (P-2) having a number average molecular weight (Mn) of 10,000 and a molecular weight distribution (Mw/Mn) of 1.2 was obtained in the same manner as in Production Example 1 except that the molecular weight of the resulting polymer was different.

3,000 g of polymer(P-2) was put in pressure proof reactor, and the urethane-forming reaction of polymer (P-2) and 3-isocyanatopropyltrimethoxysilane was carried out in the same manner as in Production Example 1 except that the amount of 3-isocyanatopropyltrimethoxysilane was changed to 130 g (NCO/OH = 0.97) to obtain an oxypropylene polymer having trimethylsilyl terminal groups (hereinafter referred to as "polymer (A2)").

The Mn and Mw/Mn of polymer (A2) were 11,000 and 1.35, respectively.

### (PRODUCTION EXAMPLE 3: Production of polymer (A3))

A polyoxypropylene diol (polymer (P-3) having a number average molecular weight (Mn) of 6,000 and a molecular weight distribution (Mw/Mn) of 1.2 was obtained in the same manner as in Production Example 1 except that the molecular weight of the resulting polymer was different.

3,000 g of polymer(P-3) was put in pressure proof reactor, and the urethane-forming reaction of polymer (P-3) and 3-isocyanatopropyltrimethoxysilane was carried out in the same manner as in Production Example 1 except that the amount of 3-isocyanatopropyltrimethoxysilane was changed to 215 g (NCO/OH = 0.97) to obtain an oxypropylene polymer having trimethylsilyl terminal groups (hereinafter referred to as "polymer (A3)").

The Mn and Mw/Mn of polymer (A3) were 7,100 and 1.38, respectively.

### (PRODUCTION EXAMPLE 4: Production of polymer (A4))

The tolylene diisocyanate, TDI, used in this Example was "TDI-80", which is a mixture of 2,4-TDI/2,6-TDI = 80/20 (mass ratio). 2EHA means 2-ethylhexyl acrylate, and KBM602 (product name, manufactured by Shin-Etsu Chemical Co., Ltd.) is N-(2-aminoethyl)-3-aminopropylmethyldimethoxysilane.

A polyoxypropylene diol (polymer (P-2)) having a number average molecular weight (Mn) of 10,000 and a molecular weight distribution (Mw/Mn) of 1.2 was prepared in the same manner as in Production Example 2.

Then, 2,000 g of polymer (P-2) was put in a 3000 ml pressure proof reactor, heated to 110°C and dehydrated in a vacuum. The atmosphere in the reactor was replaced by nitrogen, and the reactor was cooled to 80°C. Then, 104.4 g of TDI-80 (product name, manufactured by NIPPON POLYURETHANE INDUSTRY CO., LTD.) and 1 g of dibutyltin dilaurate (DBTDL) were put and reacted for 7 hours. After it was confirmed that the NCO content had reached 1.18 by titration, the reactor was cooled to ordinary temperature to obtain a prepolymer.

The Mn and Mw/Mn of the prepolymer were 20,000 and 1.6, respectively. The molar ratio (NCO/OH) of the total number of isocyanato groups in the amount of TDI used to the total number of hydroxy groups in the amount of polymer (P-2) used was 2.

Then, the prepolymer was cooled to 50°C and mixed with 2EHA and KBM602 in a 2EHA:KMB602 ratio of 184:206 (parts by mass) in accordance with Example 3 in JP-A-11-100427. The resulting mixture was maintained at 60°C for 5 days, and 25 parts by mass of the mixture was put in and reacted at 50°C in a nitrogen atmosphere for 1 hour. After it was confirmed by FT-IR that the isocyanate peak had disappeared, the reaction system was cooled to ordinary temperature to obtain an oxypropylene polymer having trimethoxysilyl terminal groups (hereinafter referred to as "polymer (A4)"). The Mn and Mw/Mn of polymer (A4) were 21,000 and 1.7, respectively.

### (PRODUCTION EXAMPLE 5: Production of polymer (A5))

400 g of polymer (A1) was put in a pressure proof reactor equipped with a stirrer and heated to about 67°C. While the temperature in the reactor was maintained at about 67°C, polymerization was carried out with stirring by adding a liquid mixture containing 72 g of methyl methacrylate, 6.5 g of n-butyl acrylate, 29.0 g of n-butyl methacrylate, 15.0 g of 3-methacryloyloxypropyltriethoxysilane, 14.0 g of n-dodecyl mercaptan and 2.5 g of 2,2'-azobis(2,4-dimethylvaleronitrile) (trade name: V65, manufactured by Wako Pure Chemical Industries, Ltd.) dropwise over 8 hours to obtain polymer (A5) having a (meth)acrylate copolymer dispersed in polymer (A1). The (meth)acrylate copolymer was centrifugally extracted from polymer (A5) with hexane, and the number average molecular weight (Mn) of the copolymer was measured. The number average molecular weight (Mn) of the copolymer was 4,000.

### (PRODUCTION EXAMPLE 6: Production of polymer (A6))

PO was reacted with polyoxypropylene glycol (Mw: 3,000) as the initiator in the presence of a zinc hexacyanocobaltate-glyme complex catalyst to obtain a polyoxypropylene diol (polymer P-A) having a number average molecular weight (Mn) of 16,000 and a molecular weight distribution (Mw/Mn) of 1.38.

Separately, PO was reacted with polyoxypropylene triol (Mw: 5,000) as the initiator in the presence of a zinc hexacyanocobaltate-glyme complex catalyst to obtain a polyoxypropylene triol (polymer P-B) having a number average molecular weight (Mn) of 20,000 and a molecular weight distribution (Mw/Mn) of 1.30.

Polymers P-A and P-B were mixed in a mass ratio of P-A:P-B = 7:3 to obtain polymer mixture P-C.

A methanol solution of sodium methoxide was added to polymer mixture P-C in an amount of 1.05 eq per hydroxy group in polymer mixture P-C, and the hydroxy groups in the polyoxyalkylene glycol were converted to -ONa groups by heating under reduced pressure while the methanol was distilled off. Then, the polymer was reacted with 1.2 eq of allyl chloride per -ONa group, then the unreacted ally chloride was removed under reduced pressure, and the salt formed as a by-product was removed to purify allyl-terminated oxyalkylene polymer P-D.

1,000 g of polymer P-D was dehydrated in a separable flask at 100°C for 2 hours, cooled to 80°C, mixed with an isopropanol solution of chloroplatinic acid and then reacted with 14.7 g of methyldimethoxyhydrosilane at 80°C for 4 hours. Then, the unreacted silane was removed at the same temperature for 2 hours to obtain polymer (A6). The Mn and Mw/Mn of polymer (A6) were 17,000 and 1.39, respectively.

### (PRODUCTION EXAMPLE 7: Production of polymer (A7))

Allyl-terminated oxyalkylene polymer (P-D) was prepared in the same manner as in Production Example 6. 1,000 g of polymer (P-D) was reacted with 26 g of 3-mercaptopropyltrimethoxysilane and 3.7 g of 2,2'-azobis(2-methylbutyronitrile) at 70°C for 12 hours with heating to obtain an oxyalkylene diol (polymer (A7)) having trimethoxysilyl groups at 70% of its terminals.

The Mn and Mw/Mn of polymer (A7) were 17,000 and 1.39, respectively.

### [EXAMPLES]

By using the respective polymers obtained above in the Production Examples and the following commercially available components, curable compositions were prepared in accordance with the formulations shown in Tables 1 and 2, and their properties were evaluated. The unit for the formulations shown in the tables is "parts by mass".

The average particle sizes of the fillers were measured by laser diffraction scattering analysis using a particle size analyzer Microtrac HRA (X-1 00) (product name) manufactured by NIKKISO CO., LTD. (the Microtrac method).
· Silicate mineral (B1): uncalcined kaolin, ASP900 (product name), manufactured by Takehara Kagaku Kogyo Co., Ltd., average particle size 1.5 µm.
· Silicate mineral (B2): uncalcined kaolin, ASP400P (product name), manufactured by Takehara Kagaku Kogyo Co., Ltd., average particle size 4.8 µm.
· Silicate mineral (B3): calcined kaolin, SATINTONE W (product name), manufactured by Takehara Kagaku Kogyo Co., Ltd., average particle size 1.4 µm.
· Silicate mineral (B4): calcined kaolin, ICEBERG K (product name), manufactured by Shiraishi Calcium Kaisha, Ltd., average particle size 3.5 µm.
· Silicate mineral (B5): calcined kaolin treated with a vinyl-containing silane, ST-KE (product name), manufactured by Shiraishi Calcium Kaisha, Ltd., average particle size 3.5 µm.
· Silicate mineral (B6): calcined kaolin treated with an amino-containing silane, ST-301 (product name), manufactured by Shiraishi Calcium Kaisha, Ltd., average particle size 0.7 µm.
· Additional filler (1): fine powder talc, SG-95 (product name), manufactured by Nippon Talc Co., Ltd., average particle size 2.5 µm.
· Additional filler (2): fine powder talc, K-1 (product name), manufactured by Nippon Talc Co., Ltd., average particle size 8.0 µm.
· Additional filler (3): calcium carbonate treated with fatty acid, CCR (product name), manufactured by Shiraishi Calcium Kaisha, Ltd., average particle size 0.08 µm.
· Additional filler (4): heavy calcium carbonate, NS-400 (product name), NITTOFUNKA KOGYO K.K., average particle size 1.7 µm.
· Dehydrator: KBM-1003 (product name), manufactured by Shin-Etsu Chemical Co., Ltd., vinyltrimethoxysilane.
· Tackifier: KBM-603 (product name), manufactured by Shin-Etsu Chemical Co., Ltd., N-2-aminoethyl)-3-aminopropyltrimethoxysilane.
· Tackifier: KBM-403 (product name), manufactured by Shin-Etsu Chemical Co., Ltd., 3-glycidyloxypropyltrimethoxysilane.
· Organic tin catalyst: dibutyltin dilaurate (DBTDL).

### (EXAMPLES 1 to 14 and COMPARATIVE EXAMPLES 1 to 11)

The ingredients other than the curing catalyst shown in Tables 1 and 2 were uniformly mixed in a three-roll mixer, and the resulting mixtures were mixed with the curing catalyst by stirring to obtain curable compositions, which were evaluated as described below.

### [Evaluation]

### [Evaluation of the viscosities of curable compositions]

The viscosity (unit; Pa·s) of the curable composition obtained in each Example was measured with a B8U viscometer using a rotor No. 6 at 1 rpm, after 5 hours of storage at 25°C. The results are shown in Tables 1 and 2.

### [Evaluation of the viscosities of curable resin components]

The viscosity (unit; Pa·s) of the curable resin component used in each Example was measured with an E viscometer (product name: RE80 viscometer, TOKI SANGYO CO. LTD., with a rotor No. 4) at 25°C. The results are shown in Tables 1 and 2.

### [Rate of viscosity Increase]

The relative viscosity of a curable composition (viscosity of curable composition/viscosity of curable resin component) based on the viscosity of a curable resin composition in each Example was calculated and defined as rate of viscosity increase. The results are shown in Tables 1 and 2.

In general, when a curable composition is formulated, the rate of viscosity increase is preferably from 1 to 30, more preferably from 1 to 25, particularly preferably from 1 to 20.

### [Tensile properties]

Tensile tests were carried out with test specimens were prepared from a cured product of the curable composition obtained in each Example in accordance with JIS K6251.

Specifically speaking, a curable composition was formed into a 2 mm-thick sheet, cured at 23°C at a humidity of 50% for 7 days, then aged at 50°C at a humidity 65% for 7 days and allowed to stand at 23°C at a humidity of 50% for at least 24 hours to obtain a cured product. The cured sheet was punched into a dumbbell-shaped test specimens No. 3. The thickness of each specimen was measured, and the stress (M50, unit: N/mm²) at 50% elongation, the maximum tensile stress (Tmax, unit: N/mm²), and the elongation at break (E, unit: %) were measured by using a tensilon tester. The results are shown in Tables 1 and 2.

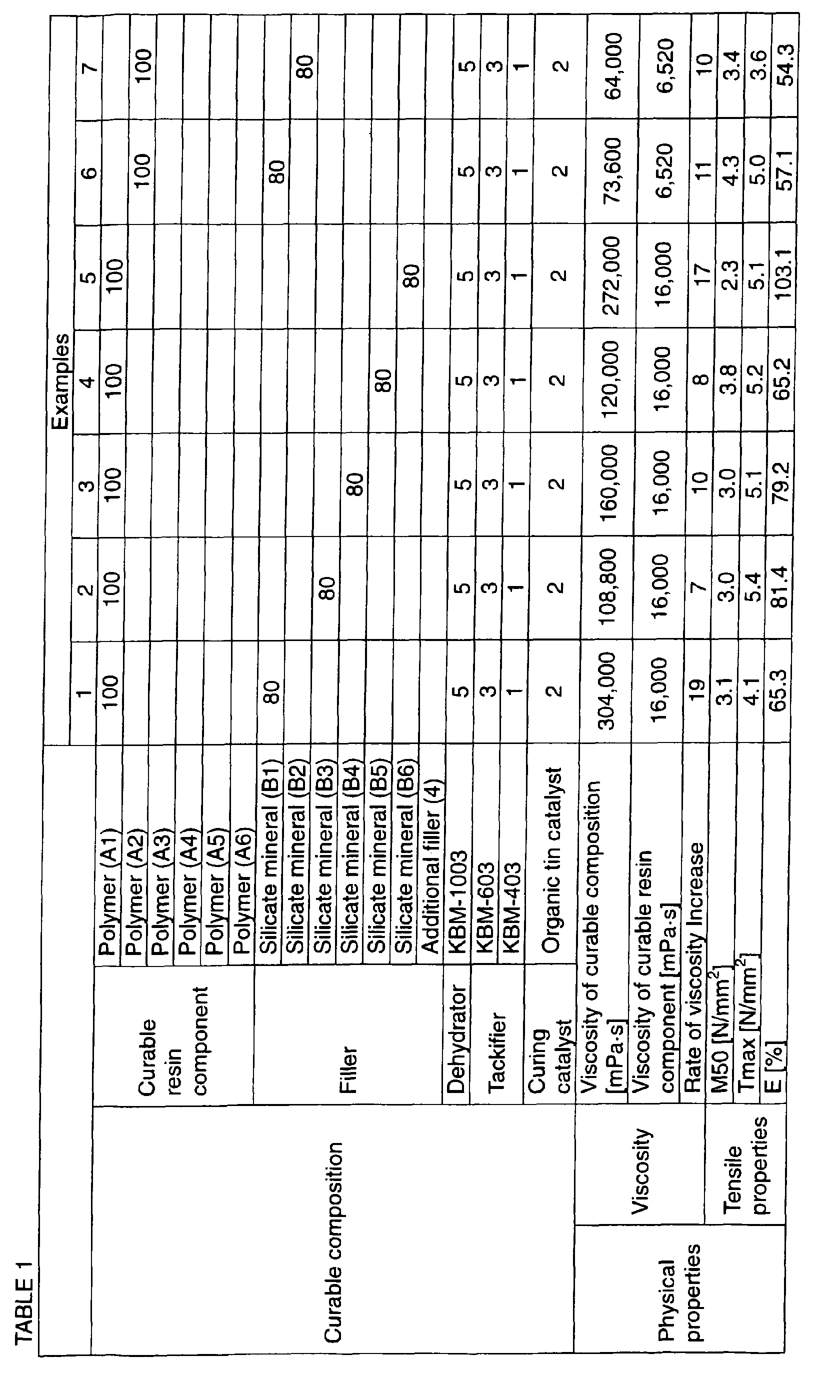

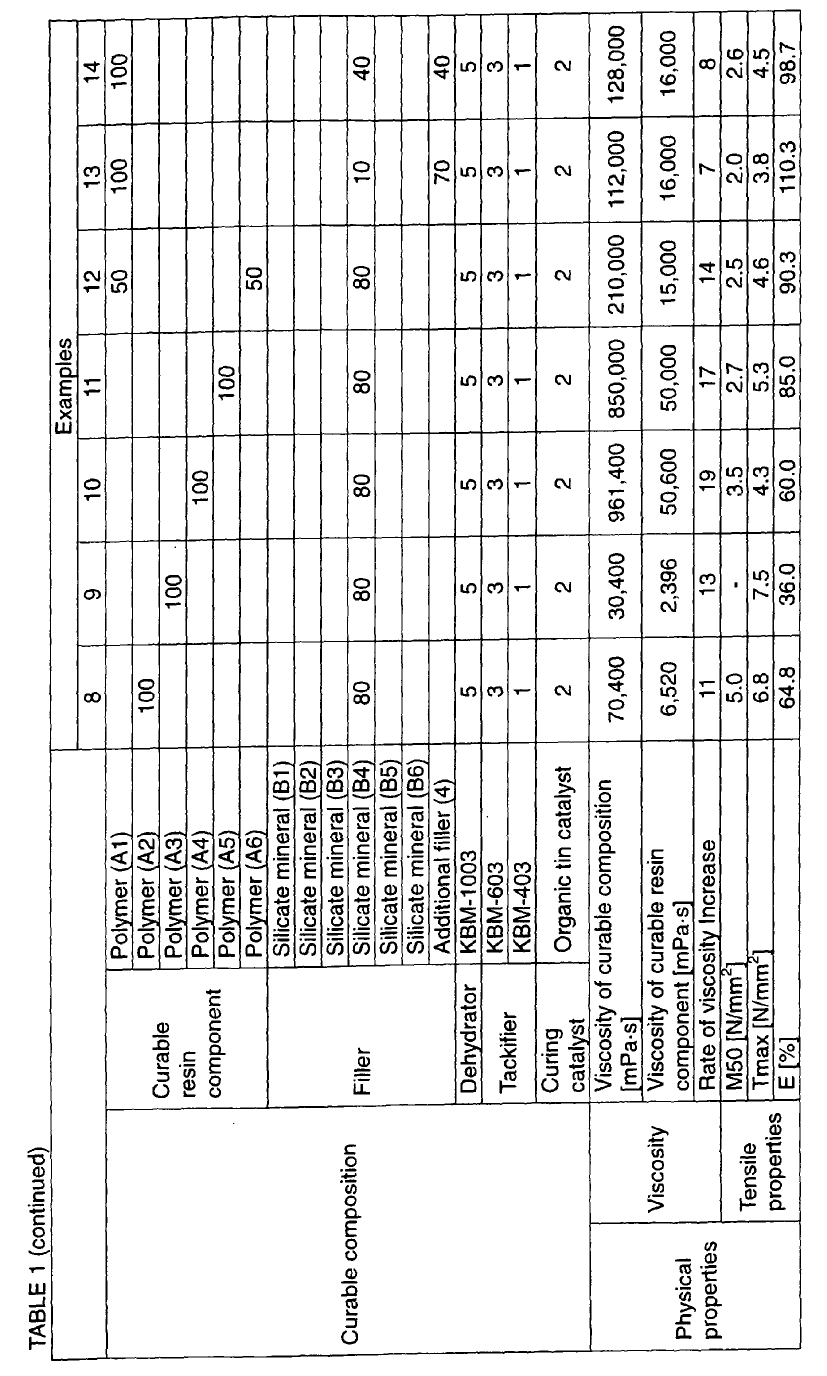

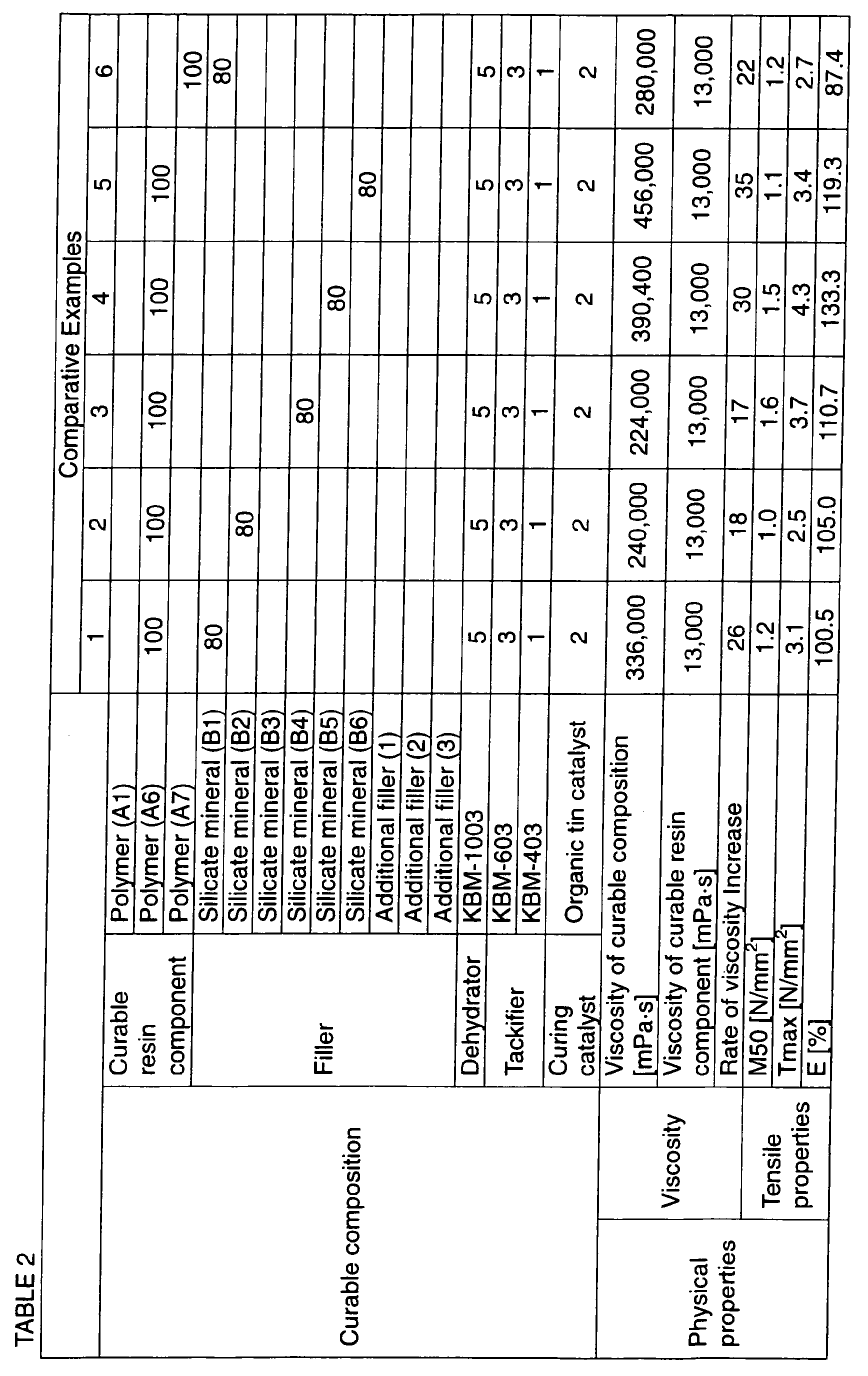

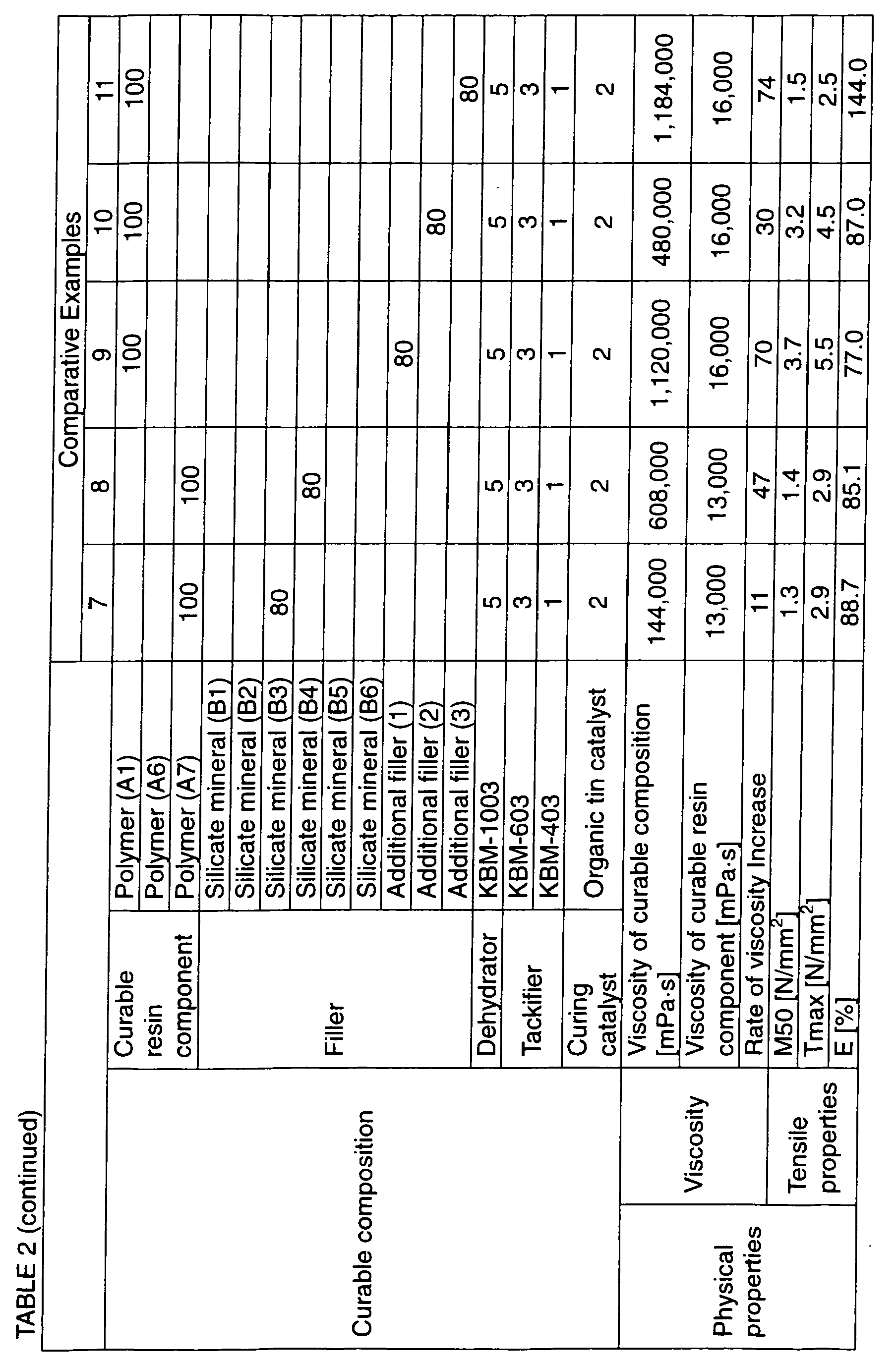

As shown in Table 1, the curable compositions obtained in Examples 1 to 14 by incorporating a silicate mineral as a filler in polymers (A1) to (A5) having a urethane bond showed low rates of viscosity increase and high tensile strengths (Tmax).

In contrast, as shown in Table 2, when instead of a silicate mineral, a different filler was incorporated in polymer (A1) having a urethane bond in Comparative Examples 9 to 11, the rates of viscosity increase were very high.

The curable compositions obtained in Comparative Examples 1, 4 to 6 and 8 by incorporating a silicate mineral in polymers (A6) and (A7) having no urethane bond showed high rates of viscosity increase. In Comparative Examples 1, 2 and 6 to 8, the tensile strengths at break (Tmax) were low.

In Comparative Example 3, the rate of viscosity increase was 17 and higher than 10, which was obtained with the curable composition obtained in Example 3 by using polymer (A1) having a similar molecular weight and the same silicate mineral (B4), and the tensile strength at break (Tmax) in Comparative Example 3 was 3.7, which is lower than 5.1 obtained in Example 3.

In Comparative Example 4, the rate of viscosity increase was 30 and higher than 8, which was obtained with the curable composition obtained in Example 4 by using polymer (A1) having a similar molecular weight and the same silicate mineral (B5), and the tensile strength at break (Tmax) in Comparative Example 4 was 4.3, which is lower than 5.2 obtained in Example 4.

### INDUSTRIAL APPLICABILITY

The curable composition of the present invention crosslinks in the presence of moisture to give a cured product having rubber elasticity. The curable composition of the present invention can be used as a sealant, an adhesive or a coating for building applications.

The entire disclosure of Japanese Patent Application No. 2009-188400 filed on August 17, 2009 including specification, claims and summary is incorporated herein by reference in its entirety.

## Claims

1. A curable composition comprising a curable resin component containing a polymer (A) having a polyoxyalkylene chain, a reactive silicon group represented by the following formula (1) and a urethane bond and at least one silicate mineral (X) selected from the group consisting of a silicate mineral (B) represented by the following formula (2) and a calcined silicate mineral (C) obtained by calcining the silicate mineral (B) at 350 to 1,200°C:
-SiX¹ₐR¹₃₋ₐ (1)
wherein R¹ is a C₁₋₂₀ monovalent organic group which may have a substituent (which is not hydrolysable), X¹ is a hydroxyl group or a hydrolyzable group, and a is an integer of from 1 to 3 provided that when a plurality of R¹s are present, they may be the same or different from one another, and when a plurality of X¹s are present, they may be the same or different from one another;
Al₂O₃·2SiO₂·nH₂O (2)
wherein n is from 0 to 4.

2. The curable composition according to Claim 1, wherein the polymer (A) constitutes from 40 to 100 mass% of the curable resin component.

3. The curable composition according to Claim 1 or 2, wherein the amount of the silicate mineral (X) is from 1 to 300 parts by mass per 100 parts by mass of the curable resin component.

4. The curable composition according to any one of Claims 1 to 3, wherein at least part of the silicate mineral (X) has a surface treated with a surface finish.

5. The curable composition according to any one of Claims 1 to 4, wherein the silicate mineral (B) is kaolinite.

6. The curable composition according to any one of Claims 1 to 4, wherein the silicate mineral (C) is calcined kaolin.

7. The curable composition according to any one of Claims 1 to 6, wherein the polymer (A) has a number average molecular weight of from 1,000 to 20,000 per terminal.

8. An adhesive or sealant comprising the curable composition as defined in any one of Claims 1 to 7.
